# EUROPEAN PATENT APPLICATION

(11) **EP 2 244 083 A1**
(43) Date of publication of application: **27.10.2010**
(21) Application number: 09158694.1
(22) Date of filing: 24.04.2009
(51) Int. Cl.: G01N 1/28, G01N 1/31, G01N 33/483

(54) **Method, apparatus, vessel and cytocentrifuge for liquid based cell preparation**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

The present invention relates to a method for liquid based cell preparation, comprising the steps of:
a) suspending a cell sample in a collection liquid (12) to obtain a cell-suspension (16),
b) depositing parts or all of the cell-suspension (16) on a density liquid (20) in a vessel (24) provided with a microscope slide (26),
c) performing a first centrifugation step with the vessel (24), in particular in a cytocentrifuge (44),
d) removing the supernatant (28) of the density liquid (20) from the vessel (24),
e) performing a second centrifugation step with the vessel (24), in particular in a cytocentrifuge (44), so that the cells (14) of the cell-suspension (16) are deposited on the microscope slide (26), and
f) removing the microscope slide (26) from the vessel (24), said slide (26) carrying the prepared cells (14).

## Description

### FIELD OF THE INVENTION

The present invention relates to a method and an apparatus for liquid based cell preparation. Further, the present invention relates to a vessel and a cytocentrifuge comprising such a vessel, in particular for the use in a method for liquid based cell preparation.

### BACKGROUND OF THE INVENTION

Cytology is a big and fast growing branch of pathology. For instance, millions of microscope slides are prepared with cells in screening programs for cervical cancer. These preparations are used to be called "smears", after the way they are prepared. A brush is used to collect cells and this brush is smeared out on a microscope slide. Disadvantages are contamination of the brush with blood, mucus and also loss of cells that stayed behind on the bristles of the brush after making the smear.

This preparation method has now largely been replaced by the so called Liquid Based Cytology (LBC). In this method the cells in the brush are washed out in a cleaning liquid, and subsequently the cells are collected from the liquid and deposited on a microscope slide. The cleaning liquid thereby destroys the blood cells and the mucus.

For the cell collecting step mainly three different techniques are known from the prior art that are predominantly used in practice. Thereby, the cells are either collected by a special filtration technique (ThinPrep®) or a centrifugation technique (SurePath® and Cytospin®).

With the filtration technique of ThinPrep® (Cytyc Corporation, Malborough, USA, www.cytyc.de) slides can be processed very fast, within approximately two minutes. The cells are thereby mixed with a fixative solution by a special preparation machine (ThinPrep® Processor) that produces a negative pressure so that the cell suspension is automatically sucked out on a micropore-filter (TransCyt Filter). Particles that are smaller than the cells can cross the filter, so that the remaining material, which is fixed on a microscope slide, mostly consists of cells. The ThinPrep® method is therefore a very fast and standardized method to obtain clean slides. However, some disadvantages and unsatisfactory preparation results appear, also mentioned in Sweeney et al.: "Comparison of the effectiveness of two Liquid-Based Papanicolaou systems in the handling of adverse limiting factors, such as excessive blood" in Cancer Cytopathology, February 25, 2006, Vol. 108 (1), pages 27-31. Main disadvantages of ThinPrep® are "patchy cell loss" and "thick preparations", which means a loss of cell patches from the microscope slide that is mainly caused by mucus, which is fixed in the fixative, and thus does not stick well to the microscope slide anymore. Blood and mucus sometimes also stick to the filter and hinder the cell-deposit on the microscope slide. Furthermore, remains of destroyed blood cells are retained by the filter when this is blocked by cells. These remains will obscure the view after the cells are transferred from the filter to the microscope slide. Therefore, the effectiveness of ThinPrep® is comparably low.

The Cytospin® technique (Shandon, Thermofisher Scientific, Waldham, Massachusetts, USA, www.thermofisher.com) relies on the technical principal of depositing cellular material on a slide using centrifugal forces. This centrifugation accelerates the continuous sedimentation process, so that the cellular material can directly be deposited and fixed on a slide in a shorter time than by simple sedimentation. One of the main disadvantages of this technique is, that a. o. due to the high centrifugal forces that are needed to attach the cells to the slide, not only the cells, but also most of the contaminating particles (such as blood and mucus) are deposited on the slide. That makes the Cytospin® method mostly unsatisfactory for a cell preparation of cells obtained during surgery. Sometimes the slides are even more unsatisfactory than conventional smears, because the same amount of cells and non-cellular components is dispersed on much less space than on normal smears, which means overlap caused by cellular and non-cellular material is common.

The third liquid based preparation technique known in the prior art is SurePath® also known under the name PrepStain® (Becton and Dickenson, New Jersey, USA, formerly Tripath Imaging, www.bd.com). This technique is based on cell sedimentation combined with a cleaning step through differential centrifugation. The preparation process itself is partly automated. According to Sweeney SurePath® has so far been the best method regarding removal of blood contamination. On the other hand, the main disadvantage of SurePath® is that it is very time consuming. Moreover, the SurePath® method is quite elaborate, which is the reason that even in procedures where time is no issue it is often not used.

Another method known in the prior art is described in WO 94/25873 A which presents a method for enriching fetal progenitor cells from maternal blood. In this method centrifugation is used to separate blood into blood plasma and cellular parts. On the other hand, this method cannot be applied for a cell preparation of epithelial cells, which sediment faster than the erythrocytes. Furthermore, this method is also too time consuming in order to be applied in commercial preparation processes.

### SUMMARY OF THE INVENTION

It is an object of the present invention to provide a new method for liquid based cell preparation which leads to a high sample quality by concurrently minimizing the preparation time in order to being faster, simpler to apply and also cheaper than the known methods, in particular the SurePath® preparation method. Further, it is an object of the present invention to provide an apparatus for carrying out said method as well as a vessel and a cytocentrifuge for use in said method.

In a first aspect of the present invention a method for liquid based cell preparation is presented that comprises the steps of:
a) suspending a cell sample in a collection liquid to obtain a cell-suspension,
b) depositing parts or all of the cell-suspension on a density liquid in a vessel provided with a microscope slide,
c) performing a first centrifugation step with the vessel, in particular in a cytocentrifuge,
d) removing the supernatant of the density liquid from the vessel,
e) performing a second centrifugation step with the vessel, in particular in a cytocentrifuge, so that the cells of the cell-suspension are deposited on the microscope slide, and
f) removing the microscope slide from the vessel, said slide carrying the prepared cells.

In a second aspect of the present invention a corresponding apparatus for liquid based cell preparation is presented.

In a third aspect of the present invention a vessel, in particular for the use in a method according to the present invention, is presented, wherein the vessel is a centrifugation-tube provided with a microscope slide coated with a coating for binding cells of a cell-suspension.

In a further aspect of the present invention a cytocentrifuge is presented which comprises such a vessel for carrying out the first and/or second centrifugation step of the method of the present invention.

Preferred embodiments of the invention are defined in the dependent claims. It shall be understood that the claimed vessel and cytocentrifuge have similar and/or identical preferred embodiments as the claimed method and as defined in the dependent claims.

The present invention is based on the idea that the above mentioned SurePath® method can be significantly improved by replacing some method steps and introducing the technical principle of cell deposition through cytocentrifugation instead of only making use of the cell sedimentation principle.

Instead of using regular collection vials as this is done in the SurePath® method, custom-built vessels, e.g. in the form of vertical tubes, are used which are provided with a microscope slide. Therefore, the cellular material can directly be deposited and fixed on the microscope slide during the cytocentrifugation. In contrast to the present invention, the SurePath® method requires to centrifuge the cells through a density medium until a pellet is formed. This pellet then needs to be treated, i.e. it first needs to be removed, then suspended in a buffer solution and afterwards the suspension has to be put into a sedimentation chamber for about 30 minutes until the cellular material is deposited on a slide.

Instead of this long treatment, the cells are, according to the present invention, directly deposited on the microscope slide which is connected to or is a part of the vessel. The time duration for performing the centrifugation steps can thereby be significantly shortened since the cells are directly fixed on the microscope slide, so that it is no longer necessary to perform the second centrifugation step until a cell pellet is formed on the bottom of the collection vial, as this is done in the SurePath® method.

Additionally, the sedimentation process that needs to be performed at the end of the SurePath® method, which is at the same time also the most time consuming method step (approximately about 30 minutes), can be omitted. Furthermore, the sedimentation process step of the SurePath® method is quite elaborate, so that by omitting this step the whole preparation process is not only faster, but also easier to handle in practice.

The diagnostic results achieved with the method according to the present invention show that the prepared slides are as clean as in the SurePath® method, even though the preparation time is reduced by more than 80 % compared to the SurePath® method. Not only the number of method steps is reduced, but also the whole method has become easier than the SurePath® method. The shorter preparation time of the method according to the present invention is especially advantageous if cellular samples are taken during surgery. In this case, the patient is still undergoing surgery while the cellular samples have to be examined. Therefore, a very fast cell preparation method is of utmost importance.

According to a preferred embodiment, the collection liquid is an alcohol-based liquid, in particular an ethanol-based liquid, an isotonic salt solution with one or more alcohols or a water-based liquid with a density equal to or lower than the density of the density liquid. The collection liquid has the function to preserve the cells and to maintain their morphological structure. The cell sample can for example be suspended in a 15 ml centrifuge tube with 3 ml of this collection liquid. A possible collection liquid is SurePath® preservative fluid. This was at first developed for cervical cytology, but can as well be used in oral cytology. It contains 24 % ethanol and small amounts of methanol and isopropanol. The cell sample can be obtained for example by a brush, which is then suspended and mixed with the collection liquid to obtain a cell-suspension.

According to another embodiment, the microscope slide is coated with a coating for binding cells of the cell-suspension. This coating is preferably a Poly-L-lysine coating, a silane coating or a gelatin coating. The coating of the microscope slide supports the adhesion of the cellular material on the microscope slide. The main function of the coating is to prevent cells to be flushed away when removing the density liquid. Since blood, mucus and other unwanted material is less or not adhered to the coating, mainly (or even only) the cellular material, which has to be examined, is deposited on the microscope slide. The cellular material is therefore actively pushed to the microscope slide due to centrifugal forces during the centrifugation step, so that the cells of the cell-suspension can be bound by the coating of the microscope slide.

The inventors therefore have also overcome another problem, since it has been always believed that the density medium where the cell-suspension is deposited onto does interfere with the deposition process. This means that the coating might loose its adhesive properties upon contact with the density medium, or the density medium might in one or another way prevent sticking of the cells to the substrate. Furthermore, after the removal of the supernatant, remaining red blood cells might be deposited on the coated substrate in between the cells. However, surprisingly this turned out not to be a problem.

Apart from using a coating on the slide it is also possible in an alternative embodiment to use a slide made of a material that does not need a coating for binding cells, e.g. a special polymer material.

According to a further embodiment, the cells are epithelial cells, in particular cuboidal epithelia, squamous epithelia, columnar epithelia or transitional epithelia or liver cells, white blood cells or fibroplasts. The cell preparation method according to the present invention is predominantly used in screening programs for the detection of cervical cancer. Therefore, mainly epithelial cells are prepared with the method according to the present invention, but also liver cells, white blood cells or fibroplasts can be prepared with the presented method. On the other hand, it has to be noted that any human or animal cellular material can be prepared with the presented method. The method presented here helps to separate the cellular material from blood, mucus and other contaminations surrounding the collected cellular material.

According to a further embodiment, the method according to the present invention comprises the step of rinsing the removed microscope slide in deionized water following step f). The deionized water reduces the number of remaining erythrocytes and flushes strongly overlapping cells away. This step is advised when a monolayer of cells is desired. Mainly the first layer adheres to the coating. This step is therefore performed at the end of the method after removing the microscope slide from the vessel. It has to be noted, that instead of deionized water also any other rinsing liquid, which reduces the number of remaining erythrocytes and flushes strongly overlapping cells away, is possible.

According to an embodiment of the present invention, it is furthermore preferred that the second centrifugation step has a higher rotation frequency than the first centrifugation step. Thereby it is especially preferred that the first centrifugation step is performed with a centrifugal force of less than 200 g and/or the second centrifugation step is performed with a centrifugal force of more than 900 g. Within the first centrifugation step the epithelial cells are collected in the density liquid due to their higher ratio of centrifugal force and flow resistance, while less dense structures like erythrocytes, mucus and very small protein-particles remain predominantly in the supernatant and the upper part of the density liquid.

In order to get rid of the blood, the mucus and the other less dens material, it is preferred that the supernatant is removed during the first and/or the second centrifugation step, or, more preferably, at the end or after the first centrifugation step. This has the advantage that after the removal of the supernatant the suspension mainly contains the desired cellular material while the contamination of the suspension with blood and mucus is significantly reduced.

According to an embodiment of the present invention, it is preferred that the removal of the supernatant at the end or after the first centrifugation step is carried out by a suction system or by an overflow system in the vessel. The supernatant can for example be pipetted off by a vacuum pump. Another possibility is that the supernatant is released through a valve in the upper part of the vessel which opens near the end of the first centrifugation step. This simplifies the method and also speeds up the whole procedure. It has to be noted that also any other suction or overflow system is possible to use in order to remove the supernatant. Removal of the supernatant without stopping the centrifuge after the first step saves much time that is otherwise wasted with stopping and restarting the centrifuge. If the supernatant is removed in a running centrifuge, the second centrifugation step can be started from an already running centrifuge, thus gaining time.

After performing the first centrifugation step and removing the supernatant, a second centrifugation step is performed with the remaining cell suspension. During this second centrifugation step the epithelial cells are deposited on the microscope slide and adhered to the coating of the slide.

It is thereby preferred that the second centrifugation step is carried out for a time duration in the range from 1 - 5 minutes. This is compared to the SurePath® method a significant time reduction, since the second centrifugation step in the SurePath® method is carried out for a time duration of at least 10 minutes until a cell pellet is formed on the bottom of the collection vial. According to the present invention this is, as already mentioned above, not necessary anymore, so that the time duration for carrying out the second centrifugation step can be reduced to 1 - 5 minutes, at least at the g-forces preferably used according to the present invention. Another gain in time is that the method of the present invention is finished after the second centrifuge step, whereas the SurePath method is not.

According to the present invention, it is preferred that the total preparation time for carrying out the method is shorter than 10 minutes. Tests have shown that the method according to the present invention can be even performed within 5 to 6 minutes. Compared to the SurePath® method (usual preparation time of about 45 minutes) this is a time reduction of more than 80 %. At the same time, this time reduction goes along with a significantly easier and less elaborate method compared to the SurePath® method. Nevertheless, the results obtained so far have shown a comparably high quality.

It should be noted that the invention is not only embodied in the claimed method, a vessel and the cytocentrifuge, but also in all utility devices that are necessary to carry out the method according to the present invention.

### BRIEF DESCRIPTION OF THE DRAWINGS

These and other aspects of the invention will be apparent from and elucidated with reference to the embodiment(s) described hereinafter. In the following drawings
Fig. 1 shows a method according to the prior art;
Fig. 2 shows a method according to the present invention;
Fig. 3 shows an example of a vessel according to the present invention;
Fig. 4 shows an example of a cytocentrifuge according to the present invention in a first position;
Fig. 5 shows an example of the cytocentrifuge according to the present invention in a second position;
Fig. 6 shows a microscope image of a cell sample prepared by the smear-technique according to the prior art, wherein a sample is obtained by smearing the cells on the substrate; and
Fig. 7 shows a microscope image of the cell sample prepared by the method according to the present invention.

### DETAILED DESCRIPTION OF THE INVENTION

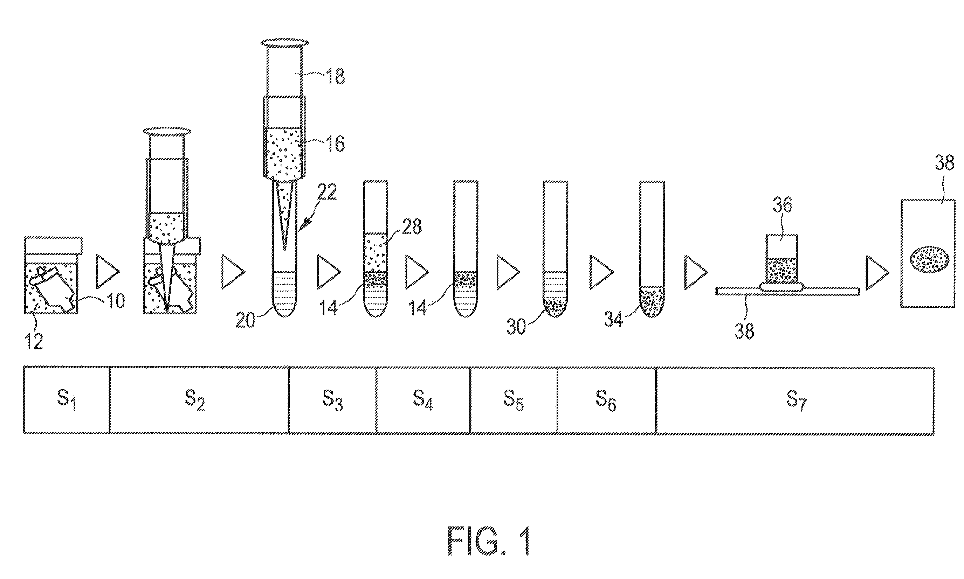

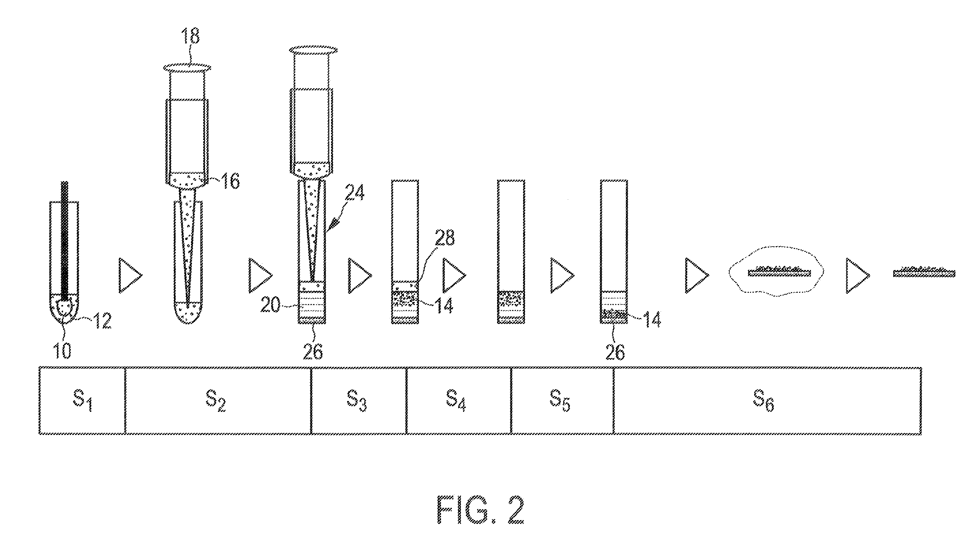

Fig. 1 illustrates a method according to the prior art, whereas Fig. 2 illustrates a method according of the present invention. By comparing Fig. 1 and Fig. 2 the differences between the state of art method and the method according to the present invention can be seen.

The method shown in Fig. 1 corresponds to the SurePath® method known in the art. The SurePath® method mainly comprises seven subsequently performed method steps S₁ to S₇. In the first step S₁ a brush 10, which carries a collected cell sample, is suspended in a collection liquid 12. Thereby, the complete head of the brush 10 remains in the collection liquid 12, so that no cells 14 can get lost. The cell sample is also contaminated with blood and mucus, which is also suspended in the collection liquid 12. As collection liquid 12 usually SurePath® preservative fluid, which is an ethanol-based liquid, is used. In the SurePath® method (Fig. 1) the brush 10 is then mixed with the collection liquid 12 for at least 1 minute in a special machine (PrepMate®) to form a cell-suspension 16.

Step S₁ is similarly performed in the method according to the present invention (see Fig. 2), except the fact that the brush 10 does not necessarily have to remain in the collection liquid 12 and also the mixing step in the PrepMate® machine is not absolutely necessary. Therefore, also less collection liquid 12 is needed (3 ml instead of 10 ml).

In step S₂ the cell suspension 16 is collected by a syringe 18 and then deposited onto a density liquid 20.

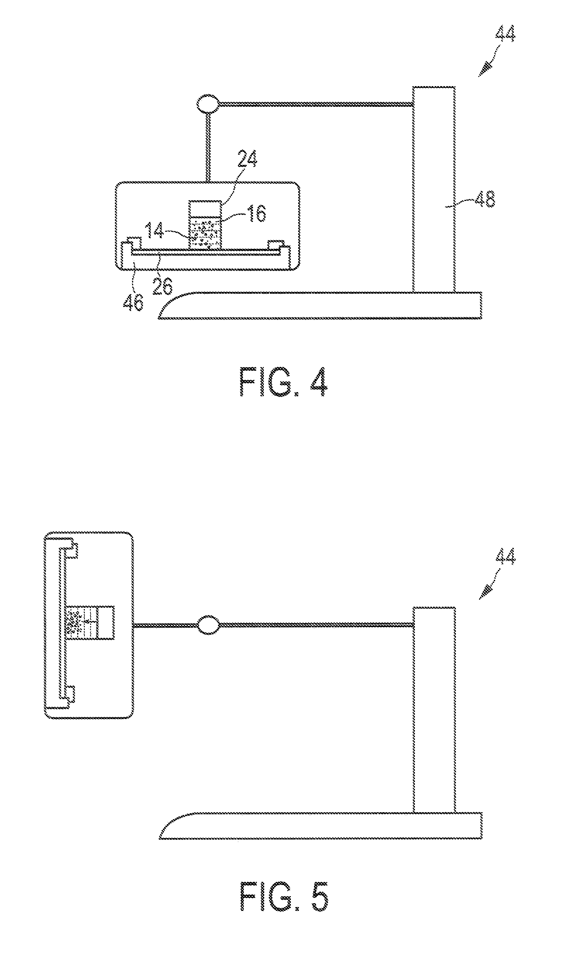

In the SurePath® method the density liquid 20 is provided in a regular centrifuge tube 22, whereas the density liquid 20 is, according to the present invention, provided in a vessel 24 which is provided with a microscope slide 26. The slide 26 can be lying on the bottom of the vessel 24 (as shown here), but the vessel 24 may as well be mounted on the slide 26 and sealed with a sealing, e.g. an O-ring, as shown in Figs. 4 and 5.

Another difference between the two methods is, that in the present invention only 1 - 1.5 ml of the cell-suspension 16 (depending on the cell concentration and the diameter of the vessel) are needed, whereas in the SurePath® method at least 6 ml of the cell suspension 16 has to be deposited onto the density liquid 20. In both methods PrepStain® density reagent is preferably used as density liquid 20. Further, preferably smaller vessels are used according to the present invention.

In step S₃ a first centrifugation step is performed, where the cells 14 are collected in the density liquid 20 due to higher ratio of centrifugal forces over flow resistance forces on them, while less dense structures like erythrocyte fragments, mucus and very small protein-particles remain in a supernatant 28 or in the upper part of the density liquid.

Compared to the SurePath® method this first centrifugation step is only performed for a time duration of approximately 1 minute instead of 2 minutes, and the centrifugal forces used are generally smaller than those used in the SurePath® method (approximately 80 to 90 g instead of 200 g).

After the first centrifugation step the supernatant 28 is in both methods removed until the border between the density liquid 20 and the collection liquid 12 (S₄). According to the present invention it is also possible to remove a small amount of the density liquid (the upper part), if the cells 14 are strongly spoiled with blood and mucus. The contaminant particles may enter the upper layer of the density liquid and this becomes especially apparent in case of a large concentration.

According to the present invention, the supernatant 28 does not necessarily need to be removed after the first centrifugation step, it can also be removed at the beginning of the second or in a break between the first and the second step. Preferably, this is done near the end of the first step, otherwise cells to be examined may be removed unwantedly. Furthermore, it is possible to remove the supernatant 28 during the first and/or the second centrifugation step. This is, for instance, done by a suction system with a tube or by an overflow system in the vessel. An overflow system is for example possible through a valve in the upper part of the vessel 24, which opens near the end of the first centrifugation step and releases the supernatant 28.

Step S₅ shows the main difference between the SurePath® method and the method according to the present invention. In the SurePath® method, a second centrifugation step with approximately 800 g centrifugal force is performed for a time duration of about 10 minutes until a cell pellet 30 is formed on the bottom of the centrifugetube 22. The second centrifugation step according to the present invention is in contrast thereto performed in a cytocentrifuge for only 2 minutes with 900 g centrifugal force. Since the cell suspension 16 is in a vessel 24, which is provided with a microscope slide 26, the cells 14 are directly deposited on the microscope slide 26 and adhered by a coating 32. This results in a significant time reduction, not only for the second centrifugation step (S₅), but also for the following method steps.

According to the SurePath® method the supernatant 28 needs to be decanted again and afterwards the cell pellet 30 is vortexed and resuspended in a buffer solution 34 (S₆). Then, the cleaned cell suspension is deposited into a settling chamber 36 on a microscope slide 38 for half an hour, so that the cells 14 can sedimentate spontaneously according to their gravity force (S₇).

In the method according to the present invention the last method step S₇, which takes half an hour, can be skipped. In step S₆ of the presented method the liquid only needs to be discarded and the microscope slide 26 is removed from the vessel 24. This last process step only takes 15 seconds instead of 30 minutes.

A rinsing step can be performed after step S₆. However, this is not obligatory. In this rinsing step the microscope slide 26 is rinsed in deionized water, whereby the number of remaining erythrocytes is reduced and strongly overlapping cells are flushed away. This step is only advised when a monolayer of cells is desired. In this case only the first layer adheres to the coating 32.

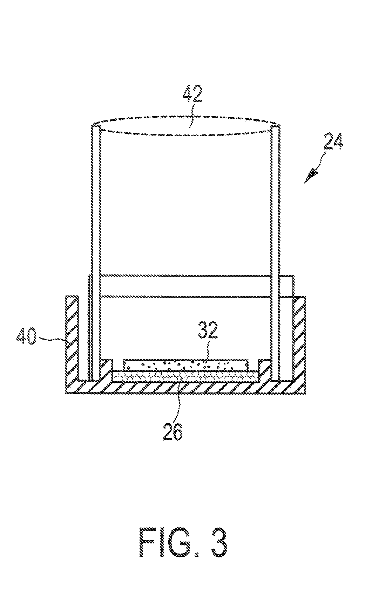

Fig. 3 shows an example of a vessel according to the present invention. The vessel 24 is a modified centrifugation tube which is provided with a microscope slide 26. As shown in Fig. 3, the microscope slide 26 is carried by a cap 40 which is attached to the vessel 24. The cap 40 can be either clamped or bold together with the vessel 24 in order to be demountable. It has to be noted, that also other mounting options are possible as long as they are demountable.

The microscope slide 26 is coated with a coating 32. The coating has the function to adhere and bind the cells 14 of the cell-suspension 16 during the second centrifugation step. A possible material for the coating 32 is for example poly-L-lysine. However, also other materials are possible for the coating 32. It also has to be noted, that the coating 32 may be arranged at any other position within the vessel, but preferably it is arranged at the lower part of the vessel 24 since the cells generally move there. Depending on the cell material or substrate material, also other embodiments are possible where no coating 32 is needed at all.

In the example shown in Fig. 3, the vessel is a centrifugation tube with a circular profile. Preferably, this centrifugation tube is a 50 ml tube, so that it is large enough that the fluid within the vessel 24 can easily be removed by a pipette. The upper part 42 of the vessel 24 is also covered by a cap during the centrifugation steps. The size of the vessel 24 is exactly adapted to a centrifuge carrying bucket so that the vessels 24 are securely fastened during the centrifugation. Such a centrifuge carrying bucket (not shown here) usually carries multiple centrifugation tubes 24.

An example of a cytocentrifuge, which is used for the first and/or the second centrifugation step, is shown in Figs. 4 and 5. Fig. 4 thereby shows the cytocentrifuge 44 in a first position while not operating, whereas Fig. 5 shows the cytocentrifuge 44 in the operating state.

As already explained, the vessel 24 carrying the cell-suspension 16 and provided with a microscope slide 26 is mounted in a fixative device 46 within the cytocentrifuge 44, e.g. in a centrifuge carrying bucket.

During operation a centrifuge rotor 48 is turned with high velocity so that the vessel 24 is accelerated on a horizontal circular path. This centrifugation accelerates the spontaneous sedimentation process, so that the cells 14 that are included in the cell-suspension 16 are accelerated towards the microscope slide 26, where they are bound on the coating 32.

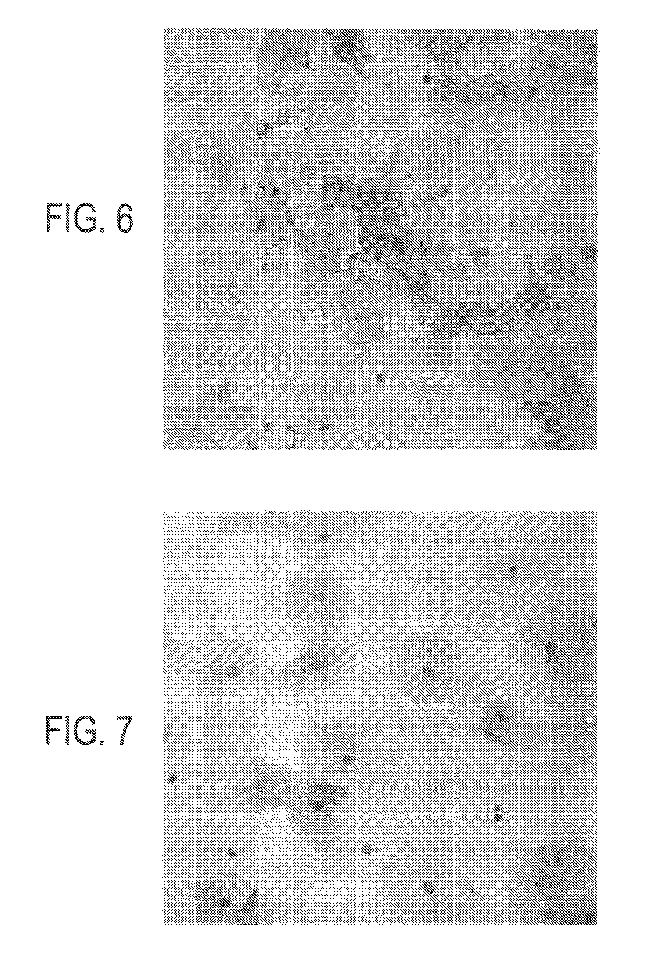

Figs. 6 and 7 show a microscope image of a cell sample. Fig. 6 shows a microscope image of a cell sample prepared by the smear-technique according to the prior art and Fig. 7 shows the same cell sample prepared by the method according to the present invention. By comparison of these two figures the extraordinary results of the preparation method according to the present invention is visualized. Whereas the cell sample in Fig. 6 is still contaminated with blood, mucus and very small protein particles, the cell sample is almost completely clean and only shows the cellular material 14 if it is prepared with the method according to the present invention (see Fig. 7). Such a clean cell sample enables to examine the cells 14 without the interference of distracting blood and mucus.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measured cannot be used to advantage.

Any reference signs in the claims should not be construed as limiting the scope.

## Claims

1. A method for liquid based cell preparation, comprising the steps of:
a) suspending a cell sample in a collection liquid (12) to obtain a cell-suspension (16),
b) depositing parts or all of the cell-suspension (16) on a density liquid (20) in a vessel (24) provided with a microscope slide (26),
c) performing a first centrifugation step with the vessel (24), in particular in a cytocentrifuge (44),
d) removing the supernatant (28) of the density liquid (20) from the vessel (24),
e) performing a second centrifugation step with the vessel (24), in particular in a cytocentrifuge (44), so that the cells (14) of the cell-suspension (16) are deposited on the microscope slide (26), and
f) removing the microscope slide (26) from the vessel (24), said slide (26) carrying the prepared cells (14).

2. A method according to claim 1, **characterized in that** the collection liquid (12) is an alcohol-based liquid, in particular an ethanol-based liquid, an isotonic salt solution with one or more alcohols or a water-based liquid with a density equal to or lower than the density of the density liquid.

3. A method according to claim 1, **characterized in that** the microscope slide (26) is coated with a coating (32) for binding cells (14) of the cell-suspension (16).

4. A method according to claim 3, **characterized in that** the coating (32) is a Poly-L-lysine coating, a silane coating or a gelatin coating.

5. A method according to claim 1, **characterized in that** the cells (14) are epithelial cells, in particular cuboidal epithelia, squamous epithelia, columnar epithelia or transitional epithelia or liver cells, white blood cells or fibroplasts.

6. A method according to claim 1, further comprising the step of rinsing the removed microscope slide (26) in deionized water following step f).

7. A method according to claim 1, **characterized in that** the second centrifugation step has a higher rotation frequency than the first centrifugation step.

8. A method according to claim 1, **characterized in that** the first centrifugation step is performed with a centrifugal force of less than 200 g.

9. A method according to claim 1, **characterized in that** the second centrifugation step is performed with a centrifugal force of more than 900 g.

10. A method according to claim 1, **characterized in that** the supernatant (28) is removed during the first and/or the second centrifugation step, or at the end or after the first centrifugation step.

11. A method according to claim 10, **characterized in that** the removal of the supernatant (28) during the first and/or the second centrifugation step is carried out by a suction system or by an overflow system in the vessel (24).

12. A method according to claim 1, **characterized in that** the second centrifugation step is carried out for a time duration in the range from 1 to 5 minutes.

13. A method according to claim 1, **characterized in that** the total preparation time for carrying out the method is shorter than 10 minutes.

14. An apparatus for liquid based cell preparation, comprising:
a) means for suspending a cell sample in a collection liquid (12) to obtain a cell-suspension (16),
b) means for depositing parts or all of the cell-suspension (16) on a density liquid (20) in a vessel (24) provided with a microscope slide (26),
c) means for performing a first centrifugation step with the vessel (24), in particular in a cytocentrifuge (44),
d) means for removing the supernatant (28) of the density liquid (20) from the vessel (24),
e) means for performing a second centrifugation step with the vessel (24), in particular in a cytocentrifuge (44), so that the cells (14) of the cell-suspension (16) are deposited on the microscope slide (26), and
f) means for removing the microscope slide (26) from the vessel (24), said slide (26) carrying the prepared cells (14).

15. A vessel in particular for the use in a method as claimed in claim 1, wherein the vessel (24) is a centrifugation-tube provided with a microscope slide (26) coated with a coating (32) for binding cells (14) of a cell-suspension (16).

16. A cytocentrifuge (44) comprising a vessel (24) as claimed in claim 14 for carrying out the first and/or second centrifugation step of the method as claimed in claim 1.
